(19) Europäisches Patentamt
European Patent Office
Office européen des brevets

(11) **EP 2 131 169 A1**

(12) **EUROPEAN PATENT APPLICATION**

(43) Date of publication:
**09.12.2009 Bulletin 2009/50**

(51) Int Cl.:
*G01L 1/22* $^{(2006.01)}$

(21) Application number: **08305233.2**

(22) Date of filing: **05.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
• **Ecole Polytechnique**
**91128 Palaiseau Cedex (FR)**
• **UNIVERSITE DE GENEVE**
**1211 Genève 4 (CH)**
• **Centre National de La Recherche Scientifique-CNRS**
**75794 Paris Cedex 16 (FR)**

(72) Inventors:
• **Rowe, Alistair**
**91400, ORSAY (FR)**
• **Renner, Christoph**
**LONDRES, W1G 6LX (GB)**
• **Arscott, Steve**
**59130, LAMBERSART (FR)**

(74) Representative: **Cabinet Plasseraud**
**52, rue de la Victoire**
**75440 Paris Cedex 09 (FR)**

(54) **Strain sensor with high gauge factor**

(57)    A strain sensor comprises a thin film portion (1) of a semiconducting material with a thickness suitable for producing full or partial depletion in the concentration of the electrical carriers of said portion. At least two pads (2, 3) form Ohmic electrical contacts with the portion (1) for sensing variations in an electrical resistance value which are produced by a stress applied to the portion. The sensor has a high gauge factor, making the sensor suitable for many applications. In addition, the sensor produces variations in an electrical resistance which are strongly non-linear as a function of a magnitude of the stress applied.

FIG.1.

EP 2 131 169 A1

**Description**

This invention relates to a strain sensor.

Strain sensors are commonly used in numerous applications, for example as strain gauges for measuring the mechanical properties of materials, in structural integrity monitoring (oil rig drilling, bridges and high rise constructions), in accelerometers for medical, aviation, automotive and mining applications, and in micro-electromechanical systems (MEMS) used as pressure gauges, fluid flow meters, etc... Many applications would benefit (or indeed) require strain sensors with high sensitivity. A high sensitivity permits higher precision measurements of strain, as well as the detection of very low magnitude strains occurring for example at the molecular or atomic scale. Applications for such increased sensitivity comprise atomic force microscopy, profilometry and biomechanical assays. In the latter cases, existing state-of-the-art stress sensors often lack the sensitivity to detect any strain whatsoever. In this case a non-negligible increase in sensitivity opens up possibilities for new applications. Equally, a high sensitivity can be translated into a device with low power consumption. This is particularly important in on-board systems where power supply is limited. Examples include automotive, aviation and other transport applications, mobile telephone and other portable electronic device applications, and in remote sensing and autonomous MEMS.

Another issue of importance in the strain sensor industry is unit cost. The strain sensor must be sufficiently low priced so as to permit its integration into other mass produced devices for applications such as those mentioned above. For such applications, strain sensors are produced using microelectronics technologies which already exist. Indeed strain sensors can be mass-produced in this manner with low unit price.

Strain sensors based on microelectronics technologies operate by producing a detectable variation in an electrical value as a result of a stress applied to the sensing portion. For example, the electrical value of concern may relate to a capacitance or a resistance. In the latter case, the sensitivity to strain is called the gauge factor, and for state-of-the-art commercially available strain sensors it is much less than 1000. In the case of silicon piezoresistors the gauge factor is of the order of 100 whereas in the cheaper metal foil strain gauges, the gauge factor is of the order of 2. For a strain sensor existing before the present invention and based on variations in an electrical resistance existing between two contact pads, the gauge factor is defined by the following equation:

$$GF = \frac{\Delta R}{R_0} \cdot \frac{1}{E} \qquad (1)$$

where $R_0$ is a value of the resistance corresponding to no stress applied, $\Delta R$ is a variation in the resistance value when a reference part of the sensing portion between the pads exhibits a relative elongation $E$ equal to $\Delta l/l$, $l$ being a length of this reference part of the sensing portion corresponding to no stress applied. Values of the gauge factor that are less than 1000 are not sufficient for some applications.

Another feature of many strain sensors existing before the present invention is that the value of the electrical parameter (for example the resistance) detected varies according to a function of the stress applied which is substantially linear. As a consequence, these strain sensors do not make it possible to detect with high precision small variations in the stress value that are superimposed on a base stress value. For this reason, many of the existing strain sensors are not suitable for applications which involve high base stress values in addition to variations of interest.

The article "Giant piezoresistance effect in silicon nanowires" from Rongrui He and Peidong Yang, Nature nanotechnology, vol 1, October 2006, describes the piezoresistive response of suspended, single crystal silicon nanowires of several micrometres in length, and with diameters ranging from 50 to 350 nanometres. These nanowires exhibit longitudinal piezoresistance coefficients up to 3.550 x $10^{11}$ Pa$^{-1}$ for strains parallel to the <111> crystal direction.

Numerous scientific and technical articles also report a piezoresistive effect in metal-oxide-semiconductor field effect transistors (MOSFET). The origin of this piezoresistive effect is the same as that in a commercially available silicon piezoresistor (gauge factor ~ 100), that is to say, a change of the effective mass (i.e. the mobility) of the charge carriers. This effect is used for reducing the electrical resistance of the conducting channel of the MOSFET between the source and the drain. This results in a lower power consumption and a faster device operating speed. As such, mechanically pre-stressed conduction channels have been used for some time in high performance MOSFETs.

An object of the present invention is then to provide a new, ultra-sensitive, strain sensor which overcomes or alleviates at least some of the drawbacks cited above for the sensors which already exist.

For this purpose, the invention proposes a strain sensor which comprises a portion of a semiconducting material, and at least two metal pads arranged for contacting electrically this portion at respective locations apart from each other. The strain sensor is adapted for producing a variable electrical resistance between the pads. The variable electrical resistance can be measured by flowing an electrical current between the contacts and within the portion, and then measuring the voltage response across the contacts. This resistance varies as a function of a stress which is applied to the portion of semiconducting material.

The strain sensor of the present invention is **characterized in that** the portion is a thin film portion comprised between two electrical insulators with respective planar interfaces between the film portion and the insulators.

If the thin film portion is comprised of a crystalline or poly-crystalline semiconductor, these interfaces are parallel and separated from each other by a film thickness which is less than or equal to w calculated using the following equation (2):

$$w = 2 \cdot \sqrt{\frac{2 \cdot \varepsilon \cdot \phi}{q^2 \cdot N}} \qquad (2)$$

wherein a doping concentration value and a dielectric permittivity value of the semiconducting material are denoted respectively $N$ and $\varepsilon$, $q$ is the electronic charge and $\phi$ is the surface potential barrier for electric charge carriers of the semiconducting material. Note that in (2), $\phi$ is expressed in units of Joules. The semiconducting portion may be p-type or n-type. In the former, the surface potential barrier is equal to the potential difference between the valence band edge in the bulk of the material and at the surface. In the latter, the surface potential barrier is equal to the potential difference between the conduction band edge in the bulk of the material and at the surface.

If the thin film portion is comprised of an amorphous semiconductor, the interfaces are parallel and separated from each other by a film thickness which is less than or equal to w calculated using the following equation (2a):

$$w = 2 \cdot \sqrt{\frac{\varepsilon \, k_B T}{q^2 \cdot N}} \qquad (2a)$$

wherein a doping concentration value and a dielectric permittivity value of the amorphous semiconductor are denoted respectively by $N$ and $\varepsilon$, $q$ is the electronic charge, $k_B$ is Boltzmann's constant and $T$ is the temperature of the semiconducting material. Note that in (2a), $k_B T$ is an energy expressed in units of Joules. $w$, given by (2a), is twice the well known Debye length in amorphous semiconductors. The amorphous semiconducting region may be p-type or n-type and this will not change the expression (2a) for $w$.

In addition, the strain sensor of the invention has a gauge factor defined by the equation (1) above, which is higher than 1000.

The feature of the invention which stipulates that the thickness of the portion of the semiconducting material is less than or equal to w as defined by equation (2) indicates that the portion is partially or fully depleted of electrical carriers. In this case a special surface piezoresistive effect exists in the semiconducting portion. It is different from the bulk piezoresistive effect (yielding gauge factors of the order of 100 as discussed above) which exists in thick semiconducting portions, or in portions where the surface potential is fixed by an additional device, such as the gate of a MOSFET. Therefore, the novel piezoresistive effect which is used in a strain sensor according to the invention cannot be derived from the bulk piezoresistive effect involved in prior art sensors. Due to the reduced thickness of the semiconducting portion in which the current is flowed, and the novel surface piezoresistive effect that is implemented in this way, the gauge factor of the strain sensor is high, with values above 1,000.

Strain sensors with gauge factors higher than 5,000, possibly up to 10,000 or more, may also be obtained.

In some embodiments of the invention, at least one of the insulators may comprise a thermally oxidized layer of the semiconducting material. In the case of silicon, such an insulator exhibits a high density, low trap state density, chemical stability, and a well-defined interface with the semiconducting material.

According to a preferred embodiment of the present invention, the electrical resistance between the pads when the current is flowed within the semiconducting portion may vary according to a strongly non-linear (essentially exponential) function of a value of the stress applied. The strain sensor therefore makes it possible to measure small variations in a stress value that are superimposed on a base value, with high sensitivity whatever the base value.

The strongly non-linear dependence of the resistance as a function of the applied stress means that the strain sensor response, that is to say the change in the resistance, is different according to the sign of the applied stress. This is notably different from the piezoresistance effect in the bulk semiconductor (i.e. commercially available silicon piezoresistors) where a change in the sign of the applied stress will simply change the sign of the resistance change but not its magnitude. As discussed below, this is a particularly important point for embodiments of the strain sensor pertaining to MEMS.

The strain sensor may have one of the four following configurations, depending on the use intended for the sensor:

/a/ the strain sensor may be comprised of an active layer obeying the layer thickness condition according to which the layer thickness should be less than or equal to *w*. This active layer is to be physically connected to a substrate that will serve as a mechanical support. An insulating layer is to be used to ensure that the active layer be electrically isolated from the substrate;

/b/ the strain sensor may further comprise a support and the semiconducting portion may comprise a cantilever beam which extends between two end points, a first one of these end points being rigidly connected to the support and a second one of the end points corresponds to a free end of the beam. In this embodiment all the electrical contacts are preferably placed on high stress regions of the beam. The high stress region will vary according to the particular mechanical mode of the beam in question. For example, the pads may preferably be near the fixed end when the cantilever is used in an atomic force microscopy, profilometry or dynamic force sensor application. Conversely, it should be positioned near the biologically active region on the cantilever in the biomechanical assay;

/c/ the strain sensor may further comprise two supports and the semiconducting portion may comprise a beam which extends between two end points, both end points of the beam being rigidly connected to the two supports, respectively. In this embodiment all the electrical contacts are preferably placed on high stress regions of the beam. The high stress region will vary according to the particular mechanical mode of the beam in question;

/d/ the strain sensor may further comprise single support structure containing a hole of desired size and cross-section, and the semiconducting portion may comprise a membrane supported above the hole around its edge by the single support structure. The outer edge of the membrane is rigidly connected to the support structure. In this embodiment all the electrical contacts are preferably placed on high stress regions of the membrane. The high stress region will vary according to the particular mechanical mode of the membrane in question;

Configuration /a/ may be considered a high sensitivity replacement for commercially available silicon piezoresistors having gauge factors of approximately 100. As such, this embodiment is ideal for the characterization of the mechanical properties of materials at ultra-small strain levels. As with commercially available strain gauges, the mechanical substrate may be bonded to the surface of interest with an appropriate glue, and in the appropriate orientation relative to the direction of the applied stress.

Configuration /b/ may be suitable for sensors such as accelerometers or movement detectors. Because of the beam inertia, the free end of the cantilever beam moves relative to the support when the sensor is submitted to acceleration, thereby producing stresses within the beam which are detected. The free end of the cantilever may also be moved by placing it in a fluid under flow. The fluid may be comprised of either a gas or a liquid. In this way the strain sensor may be useful as a flow meter in microfluidics or other applications. Given the high gauge factor of the strain sensor, this embodiment may also be useful for detection of masses down to one Dalton (1,67 . $10^{-24}$ g). In this application, the beam is put into resonance and the strain sensor measures a stress periodic in time at the resonant frequency of the beam. The value of the resonant frequency changes according to the mass present on the beam. A further application involving this embodiment is in atomic force microscopy. In this application a sharp tip placed at the free end of the beam is scanned across a surface of interest. Atomic scale topological variations in the surface and drag friction between the tip and the surface result in bending and torsion (respectively) of the beam. With three electrical contacts on the beam, the induced strain resulting from each of these mechanical modes can be determined separately.

Configuration /c/ may be suitable for a detector of strains occurring in a body (or bodies) external to the sensor. Then, both supports may be glued to the same body (or one each to two separate bodies), so that strains of the body are transmitted to the beam between the supports (or so that changes in the distance between two bodies can be monitored). Such a detector may be useful for structural integrity monitoring or sensing the strain in a separation wall between two media, for example.

Further to configuration /c/, the invention also proposes a device which comprises a resilient body and such strain sensor, with both supports rigidly fixed on the body at respective locations apart from each other.

Configuration /d/ may be suitable as a pressure sensor. This application makes use of the fact that the rigid single support and the membrane form a surface impermeable to gases or liquids. If this surface forms one of the walls of an enclosed system such as a vacuum chamber, a gas storage vessel or a liquid storage vessel, then a difference in pressure between the interior and exterior of the closed system will result in a bending motion of the membrane. This bending motion corresponds to a strain which can be detected with the strain sensor. This configuration may also be used in the applications envisaged for configuration /b/ or /c/ where a membrane is preferred to a beam.

In any configuration of the strain sensor, the film thickness is preferably less than 5 $\mu$m.

In some embodiments of the invention, the strain sensor may comprise at least three metal pads that are arranged for contacting electrically the portion of semiconducting material at respective locations apart from each other. The pad arrangement may be selected so that combinations of the variations in electrical resistances which are produced between distinct pairs of these pads relate respectively to at least two different strain modes of the portion, including but not limited to elongation, bending and torsion.

Configuration /a/ may be physically realised using commercially available silicon-on-insulator (SOI) technology. In this case, the thin surface silicon layer will form the electrically active part of the strain sensor and the insulating layer electrically insulates the active layer from the silicon substrate which thereby forms the mechanical support.

Configurations /b/, /c/ and /d/ may be physically realised as MEMS comprising an integrated strain sensor as described above. Such a system can be mass-produced at low cost, using manufacturing processes already implemented in the microelectronics industry.

Other explanations and advantages of the invention will be apparent from the detailed and non-limiting embodiments described hereafter, in connection with the appended drawings comprising:

- Figures 1, 2, 3 and 4 show main parts of four strain sensors according to configurations /a/, /b/, /c/ and /d/ of the invention;

- Figure 5 is a diagram for comparing a strain sensor from prior art and a strain sensor according to the invention;

- Figure 6 is an enlarged view of a portion of the sensors of the Figures 1, 2, 3 and 4; and

- Figures 7-14 are cross-sectional views of a substrate being processed, for illustrating successive steps of a process for producing a strain sensor according to Figure 2 and 5.

For the sake of clarity, dimensions of device parts that are represented on these figures are not in relation with actual dimensions or actual dimension ratios. In addition, identical reference numbers indicated on different figures refer to identical elements or elements with identical functions. In the figures, N indicates a common vertical direction oriented from bottom to top of the figures. Words "on", "above", "below", "lower" and "upper" are used hereafter in reference with direction N.

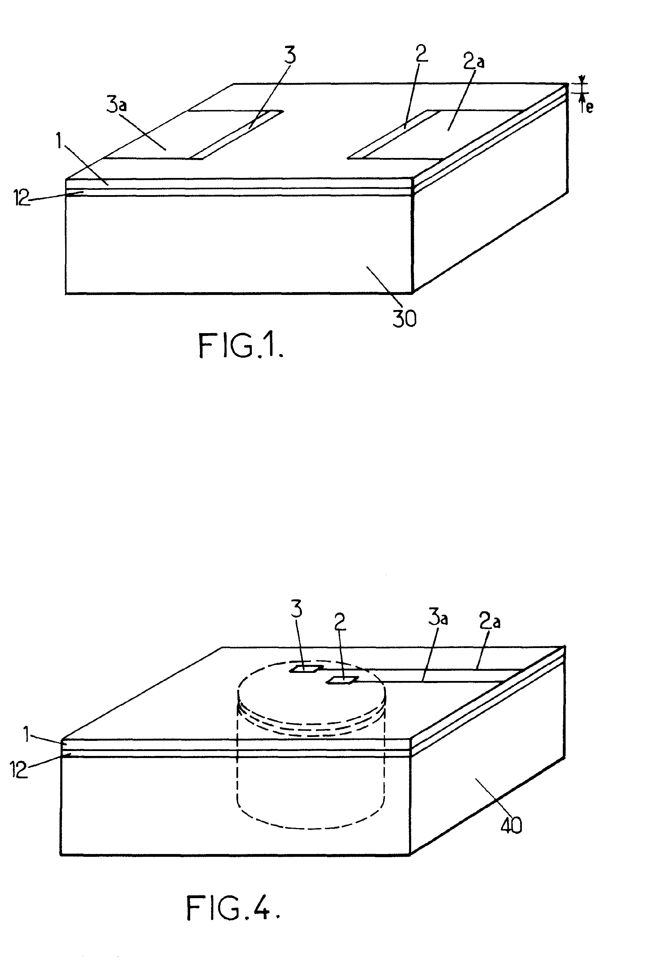

Figure 1 illustrates the configuration /a/ introduced above. The strain sensor may be a discrete component, i.e. a non-integrated device. It comprises a film of semiconducting material 1, with thickness e that is less than or equal to w calculated using equation (2). The film 1 is supported by a base portion 30, with a layer of electrically insulating material 12 between the film 1 and the base portion 30. Optionally, the base portion 30, the layer 12 and the film 1 may be cut out from a SOI substrate as used for manufacturing integrated electronic circuits. According to this configuration, the base portion 30 is maintained within the final sensor structure, and undergoes strains together with the film 1 which constitutes the sensing element of the sensor. Pads 2, 3 which form Ohmic contacts with the layer 1, and track 2a and 3a which connect the pads, are provided for detecting the variation in the electrical resistance of the film 1 when stress is communicated to the sensor. The base portion 30 may strengthen the film 1, so that the sensor can withstand stresses with higher magnitudes. Alternatively, the base portion 30 may comprise a flexible substrate of the type being developed for flexible silicon electronics.

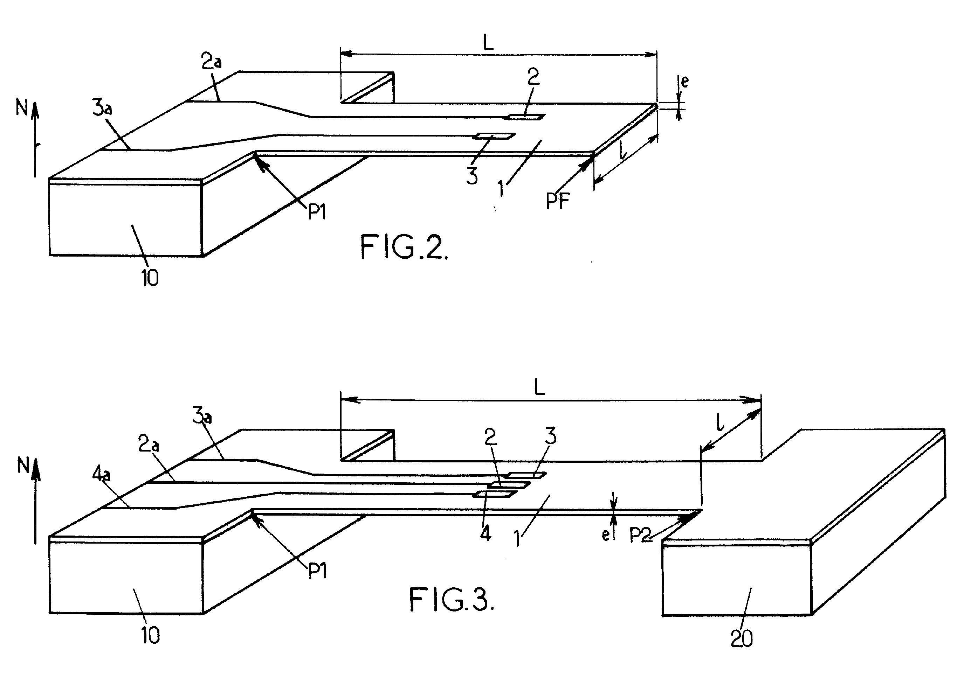

Referring to Figure 2, a beam 1 of semiconducting material extends from one support 10 so as to form a cantilever with one free end denoted PF. The other end P1 of the beam is rigidly connected to the support 10. For example, the beam 1 may be an extension of a thin film portion that is integral with the support 10. In Figure 3, the beam 1 extends between two supports 10 and 20 distant from each other. In this latter case, it is rigidly connected to both supports 10 and 20 at the beam ends P1 and P2. e, I and L respectively denote the beam thickness measured parallel to direction N, and the beam width and length measured perpendicular to the direction N. Figure 2 and 3 respectively correspond to the configurations /b/ and /c/ introduced above.

The constituting material of beam 1 is solid and resilient, so that it can withstand reversibly strains in at least one mechanical mode including but not limited to elongation, bending and torsion. Possibly a strain of the beam may be composite and comprise several strain components corresponding to different mechanical modes.

The sensor of Figure 2 is provided with two electrical pads 2 and 3 which are located on the beam 1 and apart from each other. The pads 2, 3 form Ohmic contacts to the semiconducting material. Each pad 2, 3 may be connected by a respective electrically conducting track 2a, 3a, making it possible to drive a current within the semiconducting material of the beam 1 between the pads 2 and 3. Tracks 2a and 3a are isolated from the semiconducting material of the beam 1 except at the pads 2 and 3. They also ensure that an electrical voltage produced by the current driven within the beam 1 between the pads 2 and 3 can be detected and measured. In Figure 2, a variation in the voltage value measured between pads 2, 3 may be interpreted as being produced by a bending mode strain of the beam 1, with the free end PF of the beam moving parallel to the direction N. Such strain may be caused by a number of external forces (e.g. by an acceleration of the support 10, by pushing the free end PF of the beam against a surface, by placing a mass at the free end PF of the beam, etc...). The variation in the voltage value indicates the magnitude of the strain. With some knowledge of the mechanical properties of the beam, the magnitude of the applied external force can then be obtained.

The sensor of Figure 3 is provided with three electrical pads 2-4, each one connected via a respective track 2a-4a. The pads may be aligned across the beam 1. A variation in a voltage measured between two of the pads 2-4 may be associated with an elongation of the beam 1, due to a varying separation distance between both supports 10 and 20 or a flexure of the beam 1, for example. In addition, a non-zero difference between a first voltage variation detected between the pads 2 and 3 on one hand, and a second voltage variation detected between the pads 2 and 4 on the other hand, corresponds to torsion of the beam 1.

Although particular arrangements of the pads are represented on the Figures 2 and 3, other arrangements may be used, resulting in different voltage variations for a same beam strain. Special arrangements may also be preferred for detecting selected strain modes, depending on the symmetry of each pad arrangement in relation with that of the beam, as well as the location of the pads in the length of the beam.

In an equivalent sensing method, a fixed voltage may be applied between two pads and the current measured is related to the magnitude of the strain.

The thickness e of the beam 1 is small, so that the semiconducting material constituting the beam is fully or partially depleted of mobile charge carriers. Practically, this requires that the thickness e be less than or equal to w calculated using equation (2) given in the general part of the description of the invention. The semiconducting material of the beam 1 may be doped silicon, crystalline, polycrystalline or amorphous.

If the beam 1 is composed of single crystal silicon with n-type doping, then the maximum thickness w in metres obtained from equation (2) for the beam 1 is $Cn/N^{1/2}$, where $N$ is expressed in m$^{-3}$ and $C_n \sim 56444$. To this purpose, the dielectric permittivity relative value $\varepsilon_r$ of silicon has been assumed to be equal to 10, and the surface potential barrier $\phi$ is supposed to be equal to 2/3 of the gap value of silicon at room temperature.

Similarly, if the beam 1 is composed of single crystal silicon with p-type doping, then w in metres obtained from equation (2) is $Cp/N^{1/2}$, where $N$ is expressed again in m$^{-3}$ and $C_n \sim 39912$. $\varepsilon_r$ is equal to 10 again, but $\phi$ is now supposed to be equal to 1/3 of the gap value of silicon at room temperature.

The inventors also indicate that the beam 1 may also be composed of amorphous silicon, which may be more appropriate than crystalline silicon for manufacturing some sensor configurations. In this case, the thickness e of the beam should be less than or equal to twice the well-known Debye length in amorphous silicon. This maximum length is given by the expression (2a).

In any or all of the configurations /a/, /b/, /c/, /d/ where the portion is fabricated from crystalline, polycrystalline or amorphous silicon, the sensor may form part of an integrated circuit in which the sensors is connected to fully or partially depleted SOI amplifiers, Wheatstone bridges, or other logic circuits. In this way the strain sensor may form the active component in a "smart" strain gauge.

Obviously, the invention is not limited to silicon for the beam material, and any other semiconducting material may be used as well. For example, the material of the beam 1 may be a mixed compound of arsenic and gallium.

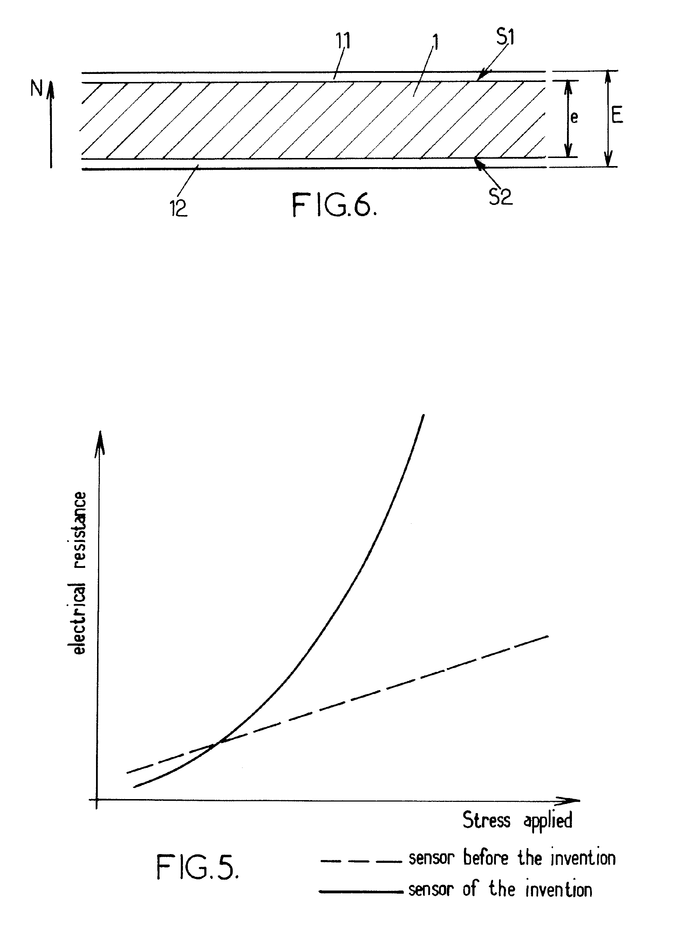

When the thickness e of the beam 1 is much less than w calculated according to equation (2) or one of the above expressions for doped crystalline silicon using the cited values for $C_n$ and $C_p$, then the electrical resistance between the pads when the current is flowed within the semiconducting portion varies with respect to the stress applied according to a strongly non-linear function of a value of said stress. A strongly non-linear variation of this sort provides very high gauge factor values. In addition, such a variation results in a resistance variation whose magnitude depends on whether the applied stress is tensile or compressive. In other words, the piezoresistive response is asymmetric. In comparison, silicon piezoresistors and metal foil strain gauges available prior to this invention show a quasi-linear change in resistance with applied stress. In this case it is only the sign, but not the magnitude, of the resistance change that depends on whether the applied stress is tensile or compressive. In other words, the piezoresistive response is anti-symmetric. Figure 5 is a diagram which compares qualitatively the variations of the measured electrical resistance as a function of the stress value, for a strain sensor according to the present invention (continuous line) and for a strain sensor as known before this invention (broken line). The curve for the invention rises in a strongly non-linear fashion (indeed almost exponentially) whereas the curve from prior art is almost a straight line corresponding to an essentially linear variation. The asymmetric (non-linear) variation of the resistance with applied stress of the strain sensor described in the current invention is particularly important for certain applications using configurations /b/ or /c/ or /d/ described above which pertain to MEMS.

In the flexible part of a MEMS device, be it the beam of configurations /b/ or /c/, or the membrane of configuration /d/, or some other MEMS realisation, the neutral axis, defined as the plane of zero stress, falls within the body of the flexible part of the MEMS. In a beam, membrane or other MEMS having a symmetrical volume and uniform mechanical properties, this means that for a given mechanical mode, at a given location in the plane whose normal is parallel to N, one surface of the beam, membrane or other MEMS structure will undergo a tensile strain, whereas the face opposite with respect to the neutral axis will undergo a compressive strain of the same magnitude. A strain sensor according to the current invention will be able to detect these strains with a very high sensitivity because of the asymmetric (non-linear) response shown in Fig. 5. In effect, the face undergoing compressive strains yields a very much larger resistance change of a certain sign, than the face undergoing tensile strains where there is a smaller resistance change of opposite sign. The net resistance change is non-zero and has a magnitude proportional to the magnitude of the strain. On the other hand, a strain sensor as known prior to the current invention has a linear response (see also Fig. 5). This means that the face undergoing compressive strains results in a resistance change of a certain sign, while the face undergoing tensile strain results in the same magnitude of resistance change with opposite sign. The net resistance change due to the strain, in the absence of any other artificial asymmetries, is thus zero. A strain gauge as known prior to the current invention cannot detect strains in MEMS structures without the introduction of an artificial asymmetry.

In practical terms the introduction of an artificial asymmetry complicates the production process, making it more expensive and decreasing yields. The current invention in configurations /b/, /c/ and /d/ therefore provides not only a greatly improved sensitivity, but costs savings and improvements in production yield as well.

Figure 6 is an enlarged sectional view of the beam 1 parallel to the direction N. It shows that the portion of semiconducting material forming the active layer, beam, membrane or other MEMS device, may be comprised between two layers 11 and 12 of electrical insulators. Interfaces between the portion of semiconducting material and the layers 11 and 12 are denoted S1 and S2. They are parallel to each other. Although the total thickness along direction N for the semiconducting material together with the layers 11 and 12 is E, the thickness e of the semiconducting portion only is to be compared to the calculated value w for determining a sensor according to the invention. Also in the present specification, the phrases active layer, beam, membrane or other MEMS device, refer to the semiconducting portion only, without the layers 11 and 12.

The layers 11 and 12 may be formed using several methods. According to a first one of these methods, the layers 11 and 12 may be deposited onto the semiconducting portion of the beam 1 using a CVD process (Chemical Vapour Deposition). Alternatively, the layers 11 and 12 may be formed by bringing a gaseous or liquid oxidizing agent into contact with an initial semiconducting portion, and then heating. A layer of thermal oxide results from the reaction of the oxidizing agent and the surface material of the portion, with an oxide layer thickness which depends of the reaction time and the temperature. In this latter case, the thickness e is that of the remaining part of unreacted semiconducting material between the thermal oxide layers. If the semiconducting material is silicon, then the thermal oxide formed therefrom at its surface is silica. Alternatively, the layers 11 and 12 may be formed from the native oxide layer present on the semiconducting portion.

The inventors point out that the beam 1 of a strain sensor according to the invention as claimed must be limited by two electrical insulators so that the thickness e be defined and less than the upper limit value w. These insulators may be covering layers of solid material as represented in Figure 4, but the beam 1 may also be devoid of such layers. In such latter case, the electrical insulators to be considered are the air or the gas which surrounds the semiconducting portion of the beam 1. Another possibility is to functionalize the two surfaces of the beam 1 so as to chemically passivate them, for example with organic solids known to retain their properties over very long periods of time.

In any of these cases, it is advantageous that the electrical insulators provide chemical passivation of the beam 1 surface. In other words, the surface properties preferably do not change as a function of time due to exposure to air, water or other potential reagents. It is in particular in ultra_high vacuum (UHV) applications where chemically passivated surfaces are not required. In effect, the UHV environment is free of all gases and liquids, and so no chemical modification of the surface of the semiconducting portion is possible.

The inventors further indicate that a FET manufactured according to the SOI (Silicon On Isolator) technology does not constitute a strain sensor according to the invention. In particular, SOI substrates are available commercially which have fully or partially depleted active layers separated from highly conductive base parts of the substrates by buried insulating layers. Then, a FET channel manufactured within such depleted active layer of a SOI substrate has a thickness which is less than or equal to w of equation (2). But the highly conductive base part of the SOI substrate, below the buried oxide layer and/or the FET gate above the channel cause by design a remote electrostatic interference with the channel which inhibits the surface piezoresistive effect necessary to the invention. For this reason, FETs manufactured from a depleted SOI substrate do not provide gauge factor values above 1000.

In a strain sensor according to the invention, the film portion of semiconducting material may have dimensions measured along two directions parallel to the film and perpendicular to each other which are more than 10 x w, preferably more than 1000 x *w*. Indeed, the provision of the only thickness e for being less than or equal to w is sufficient for obtaining a gauge factor value above 1000. In the case of a beam according to Figure 2 or 3, the width I or the length L, or both, may be greater than 10 x w. Then, the sensor may be stronger, so as to withstand stresses with higher magnitudes without being damaged. In addition, the manufacturing of the sensor may be easier. For example, the width I may be equal to 5 $\mu$m (micrometre) and the length L may be equal to 20 $\mu$m.

Figure 4 represents a strain sensor according to the configuration /d/ introduced in the general part of this specification. The strain sensor comprises a rigid support 40, with a through-hole extending from one side of the support 40 to an opposite side. A continuous slab 1 extends on the support 40 so as to close the hole at one side of the support 40. The slab 1 may be glued or fixed to the support 40, and forms a sealing around the hole. The glue may also produce an electrical insulation of the slab from the support 40. The slab is a rigid or resilient structure which incorporates a semiconducting film as a sensing portion according to the invention. For this reason, it is also labelled 1 in Figure 4. Actually, the semiconducting film may form the whole slab, or be part of a laminated structure.

The configuration /d/ may also be realised using SOI technology. In this case, the rigid support 40 consists of the bulk substrate part of the SOI substrate, and the layer 12 corresponds to the buried oxide layer. A hole of the desired size and shape may be etched into the substrate 40 side up to the insulating oxide layer 12. Etching by potassium hydroxide (KOH) may be used to perform this step since it will etch the silicon substrate but not the oxide layer 12. The oxide layer 12 therefore forms an etch stop layer. The thin silicon part of the SOI substrate forms the slab 1 and the joint between the slab 1 and the support 40, via the layer 12, is by default sealed. In this case, the slab 1 forms the sensing portion according to the invention.

A process for manufacturing a strain sensor according to the invention is now described. For a strain sensor including a MEMS part, including but not limited to the configurations /b/, /c/ and /d/ above, techniques commonly used in electronics can be exploited for the making of the sensor. The processing steps are cited in a correct order so as to produce the sensor, but details of each individual processing step which are well known to a circuit manufacturer are not reported. One would refer to the numerous appropriate documents that are available, including instructions that are provided with the circuit processing tools by the suppliers of these tools.

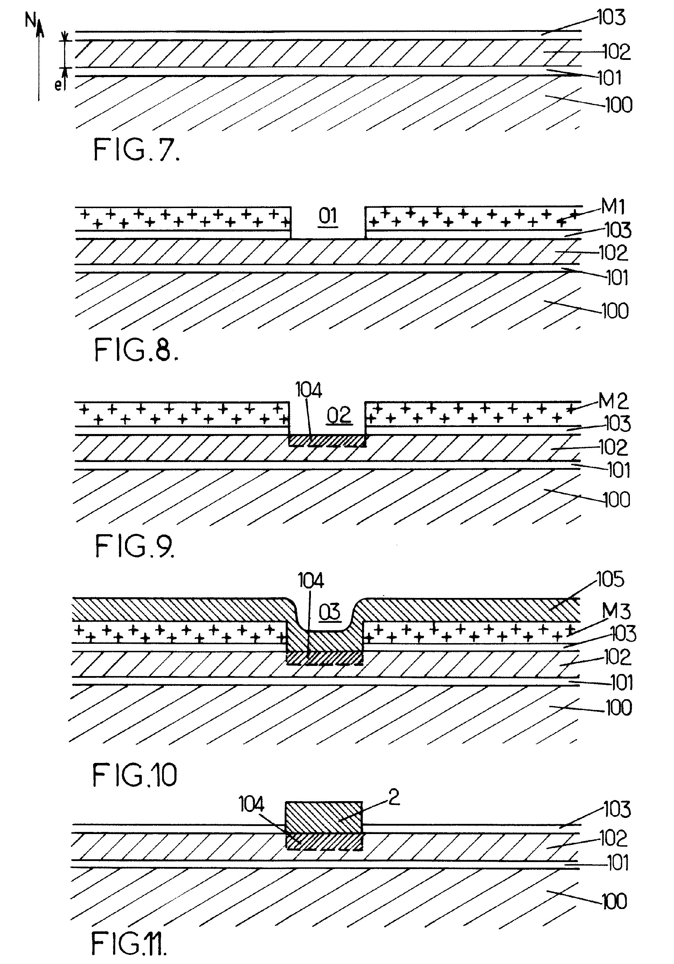

Figure 7 is a cross-sectional view of a substrate which may be used for manufacturing the strain sensor. The substrate comprises a base substrate 100, an active layer 102 and a buried insulating layer 101. The layer 101 is located between the base substrate 100 and the active layer 102. Preferably, the active layer 102 has a doping concentration such that the thickness measured parallel to the direction N which is less than or equal to w.

Such a substrate, of depleted SOI type, may be supplied commercially. Alternatively, it may be obtained from a usual bulk silicon wafer by oxygen ion implantation using a controlled acceleration voltage. In this latter case, the acceleration voltage is selected so that the oxygen ions are implanted at a suitable depth below the upper surface of the wafer, for forming the insulating layer 102 from the initial silicon atoms of the wafer and the implanted oxygen ions.

The active layer 102 is composed of semiconducting silicon, with a doping concentration $N$ selected with respect to the thickness e of the layer 102 so that e is less than or equal to w. For example, the doping concentration $N$ may be less than $10^{17}$ cm$^{-3}$, preferably less than $10^{16}$ cm$^{-3}$, so that the thickness e should not be too small.

Then, an additional silica layer 103 is formed at the upper surface of the active layer 102. Preferably, the layer 103 may be formed by thermally oxidizing the surface of the active layer 102.

A first mask M1 is formed on top of the layer 103 with an appropriate masking material, for defining the locations of the electrical pads (Figure 8). An example of such masking material is a sensitive photoresist. The photoresist is patterned using photo-lithography for forming several windows O1 in the mask M1, corresponding to the pads. Only one window O1 is shown in the Figure, due to the sectional view. The layer 103 is thus exposed in the windows O1. The silicon dioxide of the layer 103 is etched away, using for example a hydrofluoric acid based solution. Such an etching process does not damage the silicon of the active layer 102 (Figure 8). The mask M1 is then removed using e.g. acetone or an oxygen plasma.

A second lithography mask M2 is now formed on top of the wafer and patterned using the same photo-lithography as for the mask M1. Windows 02 are thus opened in the mask M2, and correspond to the etched portions of the silica layer 103. Doping species of the same type as the initial doping of the active layer 102 are implanted through the windows 02. The implant depth is not critical. Highly doped regions 104 are thus created just below the upper surface of the active layer 102 in the windows 02 (Figure 9). The mask M2 is removed.

A third lithography mask M3 is formed on top of the wafer and patterned again using the same photo-lithography as for the masks M1 and M2. The mask M3 thus has windows 03 which correspond to the doped regions 104. Then a metal layer 105, for example a platinum (Pt) layer, is deposited on the wafer and the mask M3 (Figure 10). After removal of the mask M3, metal pads referenced 2 in Figure 11 remain only on the active layer 102, and are in good (Ohmic) electrical contact with this layer.

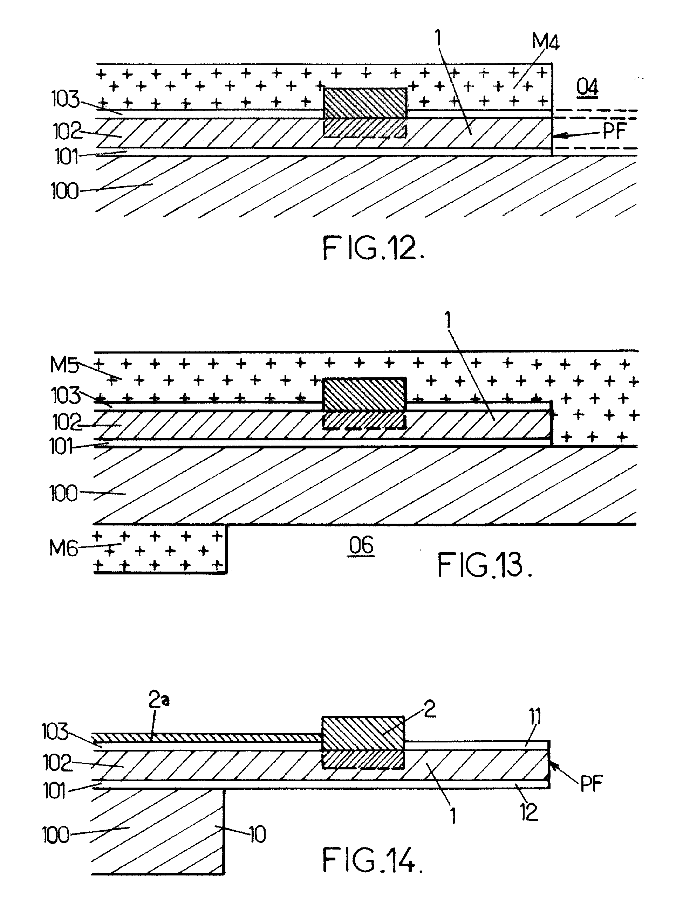

A fourth mask M4 is now deposited on the top of the silicon wafer. The mask M4 is patterned according to the outline, in the dimensions perpendicular to the direction N, of the portion of semiconducting material to be used in the final sensor. For example, the mask M4 is patterned so that masking material remains at locations above the beam 1 (membrane or other MEMS device) and the supports 10/20 to be formed. Figure 12 illustrates the manufacturing of a strain sensor according to Figure 2 and the window 04 defines the location of the free end PF of the beam. Portions of the layers 103, 102 and 101 that are uncovered by the mask M4 are removed successively. At this stage, the base substrate 100 is exposed outside the outline corresponding to the beam, membrane or other MEMS device and the support. The mask M4 is removed.

The whole top surface of the wafer is now protected using a fifth mask M5 (Figure 13). A sixth mask M6 is also applied to the rear face of the wafer, for protecting only those parts of the base substrate 100 which are intended to form a support 10/20 or which are to remain in the final device. The parts of the base substrate 100 which are exposed are selectively removed, with respect to the parts protected by the mask M6. The base substrate 100 is thus etched away under the beam 1, up to the level of the bottom surface of the silica layer 101 to obtain liberation of the beam 1, membrane or other MEMS device. When the base substrate 100 is composed of silicon, the etching may be performed by using wet etching with potassium hydroxide (KOH) solution or dry etching with sulphur hexafluoride ($SF_6$) gas. Masks M5 and M6 are now removed and conducting tracks 2a, 3a and possibly 4a are formed (Figure 14).

Although another mask has been introduced in the above-description for each processing step recited, the Man skilled in the art of integrated circuit processing will understand that some of the masks may be common to several steps, thereby reducing the number of masks involved.

One will also understand that a strain sensor according to the invention can be use for many applications in addition to those already cited. Among these applications, the inventors also cite biodetector applications, pressure sensors, atomic force microscopes and fluid flow detectors. For more details about such applications, one could refer to the international patent application published under WO 2007/080259. In particular, the sensing semiconducting portion may have shapes other than a beam or circular membrane, depending on the applications.

**Claims**

1.  Strain sensor comprising a portion (1) of a semiconducting material, and at least two metal pads (2-4) arranged for contacting electrically said portion at respective locations apart from each other, the strain sensor being adapted for producing a variable electrical resistance between both pads for a current flowed within the portion, said resistance varying as a function of a stress applied to said portion,

    the strain sensor being **characterized in that** the portion is a thin film portion comprised between two electrical insulators (11, 12) with respective planar interfaces (S1, S2) between the film portion and said insulators, said interfaces being parallel and separated from each other by a film thickness (e) less than or equal to $w$, wherein $w$ is calculated using the following equations:

$$w = 2 \cdot \sqrt{\frac{2 \cdot \varepsilon \cdot \phi}{q^2 \cdot N}}$$

    if the semiconducting material is crystalline or polycrystalline,

$$\text{or } w = 2 \cdot \sqrt{\frac{\varepsilon \, k_B T}{q^2 \cdot N}}$$

    if the semiconducting material is amorphous,

    a doping concentration value and a dielectric permittivity value of the semiconducting material being denoted respectively $N$ and $\varepsilon$, $q$ being the electronic charge, $\phi$ being the surface potential barrier for electric charge carriers of the semiconducting material, $k_B$ is Boltzmann's constant and $T$ is the temperature of said semiconducting material, and **in that** the strain sensor has a gauge factor $GF$ higher than 1000, said gauge factor being defined by the following equation:

$$GF = \frac{\Delta R}{R_0} \cdot \frac{1}{E}$$

    wherein $R_0$ is a value of the electrical resistance between the pads when no stress is applied to the semiconducting portion, $\Delta R$ is a variation in said electrical resistance value when the semiconducting portion exhibits a relative elongation $E$ equal to $\Delta l / l$, $l$ being a length of a reference part of the semiconducting portion between the pads.

2.  Strain sensor according to claim 1, wherein the semiconducting material is single crystal silicon with n-type doping, and wherein the film thickness (e) between the interfaces (S1, S2) of the portion with the insulators is less than $C_n / N^{1/2}$, said thickness being expressed in metres, $N$ in $m^{-3}$ and $C_n = 56444$.

3. Strain sensor according to claim 1, wherein the semiconducting material is single crystal silicon with p-type doping, and wherein the film thickness (e) between the interfaces of the portion with the insulators is less than $C_p/N^{1/2}$, said thickness being expressed in metres, $N$ in m$^{-3}$ and $C_p$=39912.

4. Strain sensor according to any one of the preceding claims, wherein the electrical resistance between the pads (2-4) when the current is flowed within the semiconducting portion varies with respect to the applied stress according to a strongly non-linear function of a value of said stress.

5. Strain sensor according to any one of the preceding claims, wherein dimensions of the film portion (1) of semiconducting material are more than 10 x $w$, preferably more than 1000 x $w$, measured along two directions parallel to the film and perpendicular to each other.

6. Strain sensor according to any one of the preceding claims, wherein the gauge factor $GF$ is more than 5000.

7. Strain sensor according to any one of the preceding claims, wherein the doping concentration $N$ is less than $10^{17}$ cm$^{-3}$, preferably less than $10^{16}$ cm$^{-3}$.

8. Strain sensor according to any one of the preceding claims, wherein the film thickness (e) is less than 5 $\mu$m.

9. Strain sensor according to any one of the preceding claims, wherein at least one of the insulators (11, 12) comprises a thermally oxidized layer of the semiconducting material.

10. Strain sensor according to any one of the preceding claims, comprising at least three metal pads (2-4) arranged for contacting electrically the portion (1) of semiconducting material at respective locations apart from each other, so that combinations of variations in electrical resistances produced between distinct pairs of said pads relate respectively to at least two different strain modes.

11. Strain sensor according to any one of claims 1 to 10, further comprising a support (10) and wherein the semiconducting portion comprises a cantilever beam (1) extending between two end points, a first one (P1) of said end points being rigidly connected to the support and a second one (PF) of said end points corresponds to a free end of the beam.

12. Strain sensor according to any one of claims 1 to 10, further comprising two supports (10, 20) and wherein the semiconducting portion comprises a beam (1) extending between two end points (P1, P2), both end points of the beam being rigidly connected to the two supports, respectively.

13. Strain sensor according to any one of claims 1 to 10, further comprising a support (40) with a hole therethrough, and the semiconducting portion comprises a membrane supported above the hole around an edge of said membrane rigidly connected to the support structure.

14. Micro-electronic-mechanical system (MEMS) comprising a strain sensor according to any one of the preceding claims.

15. Device comprising a resilient body and a strain sensor according to claim 12, wherein both supports (10, 20) are rigidly fixed on the body at respective locations apart from each other.

FIG.1.

FIG.4.

FIG.2.

FIG.3.

FIG.6.

FIG.5.

— — — sensor before the invention

——— sensor of the invention

**FIG.7.**

**FIG.8.**

**FIG.9.**

**FIG.10**

**FIG.11.**

103
102
101
100

1    M4

04

PF

**FIG.12.**

M5
103
102
101

100

M6

1

06

**FIG.13.**

2a    2    11

103
102
101
100    10

PF

1    12

**FIG.14.**

Europäisches
Patentamt

European
Patent Office

Office européen
des brevets

**EUROPEAN SEARCH REPORT**

**Application Number**

EP 08 30 5233

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/42799 A (HONEYWELL DATA INSTR INC) 26 August 1999 (1999-08-26) <br> * abstract * <br> * figures 4a,4b * <br> * page 1, line 21 - page 2, line 4 * <br> * page 7, lines 11-29 * <br> * claims 26,29,36 * <br> * page 10, lines 5-11 * | 1-15 | INV. <br> G01L1/22 |
| A | STRITTMATTER R P ET AL: "Piezoelectrically enhanced capacitive strain sensors using GaN metal-insulator-semiconductor diodes" JOURNAL OF APPLIED PHYSICS, AMERICAN INSTITUTE OF PHYSICS. NEW YORK, US, vol. 94, no. 9, 1 November 2003 (2003-11-01), pages 5958-5963, XP012060586 ISSN: 0021-8979 * page 5961, paragraph B - page 5962 * | 1-15 | |
| A | US 3 585 415 A (MULLER RICHARD S ET AL) 15 June 1971 (1971-06-15) * column 2, lines 26-30 * * column 5, lines 30-41 * * claims 4,10 * | 1-15 | TECHNICAL FIELDS SEARCHED (IPC) <br> G01L |
| A | US 2005/036905 A1 (GOKTURK HALIT SUHA) 17 February 2005 (2005-02-17) * paragraphs [0083], [0084] * * paragraphs [0110] - [0112] * | 1-15 | |
| A | US 4 937 550 A (TAWADA YOSHIHISA ET AL) 26 June 1990 (1990-06-26) * abstract * * column 1, lines 24-32 * | 1-15 | |

The present search report has been drawn up for all claims

| Place of search | Date of completion of the search | Examiner |
|---|---|---|
| The Hague | 18 November 2008 | Nelva-Pasqual, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 08 30 5233

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2008

| Patent document cited in search report | | Publication date | Patent family member(s) | | Publication date |
|---|---|---|---|---|---|
| WO 9942799 | A | 26-08-1999 | CA | 2320857 A1 | 26-08-1999 |
| | | | JP | 2002504675 T | 12-02-2002 |
| US 3585415 | A | 15-06-1971 | NONE | | |
| US 2005036905 | A1 | 17-02-2005 | JP | 2005070038 A | 17-03-2005 |
| US 4937550 | A | 26-06-1990 | NONE | | |

EPO FORM P0459

For more details about this annex : see Official Journal of the European Patent Office, No. 12/82

**EP 2 131 169 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007080259 A

**Non-patent literature cited in the description**

- **Rongrui He ; Peidong Yang.** Giant piezoresistance effect in silicon nanowires. *Nature nanotechnology,* October 2006, vol. 1